# EUROPÄISCHE PATENTSCHRIFT

(11) **EP 3 375 947 B1**
(45) Veröffentlichungstag und Bekanntmachung des Hinweises auf die Patenterteilung: **07.06.2023**
(21) Anmeldenummer: 17161539.6
(22) Anmeldetag: 17.03.2017
(51) Int. Cl.: E04B 1/38, F16B 5/12, E04B 1/26, F16B 12/20

(54) **VERBINDER ZUM SCHRÄGVERSCHRAUBEN ZWEIER WERKSTÜCKE**
CONNECTOR FOR SCREWING TWO WORKPIECES AT AN ANGLE
ÉLÉMENT D'ASSEMBLAGE PAR VISSAGE OBLIQUE DE DEUX PIÈCES

(43) Veröffentlichungstag der Anmeldung: 19.09.2018
(73) Patentinhaber: Knapp GmbH, 3324 Euratsfeld (AT)
(72) Erfinder: KNAPP, Friedrich, 4362 Bad Kreuzen (AT)
(74) Vertreter: Weiser & Voith Patentanwälte Partnerschaft

(56) Entgegenhaltungen:
- EP-A1- 2 799 636
- DE-A1-102009 022 161

## Beschreibung

Die vorliegende Erfindung betrifft einen Verbinder zum Schrägverschrauben zweier Werkstücke.

Zwei Werkstücke, z.B. Holzwerkstücke, können entweder stumpf, z.B. auf Stoß oder in Gehrung, mit Überlappung, z.B. mit Nut und Spund, Schlitz und Zapfen, Zinkungen od.dgl., oder mit Hinterscheidungen, z.B. einer Schwalbenschwanzverbindung, Gratung od.dgl., miteinander verbunden werden. Zur Erhöhung der Stabilität kann die Verbindung zusätzlich verklebt bzw. verleimt, gedübelt, genagelt und/oder verschraubt werden. Ferner ist bekannt, eine Platte - z.B. aus Metall - über eine Verbindungsstelle zweier Werkstücke zu legen und mit beiden Werkstücken zu verschrauben oder an die Werkstücke zu nageln. Stehen dabei Schrauben oder Nägel in rechtem Winkel zu der Metallplatte, so ist deren Belastung infolge von Zugkräften der beiden Werkstücke eine ungünstige Scherbelastung.

Einen Spezialfall für eine Verbindung mit verschraubter Metallplatte stellt die Schrägverschraubung dar, bei welcher die Schrauben in spitzem Winkel durch die Metallplatte in das jeweilige Werkstück gedreht werden, sodass jede Schraube von der Verbindungsstelle weg weist. Um den für die Schrägstellung der Schrauben vorgesehenen spitzen Winkel einfacher einhalten zu können, ist ferner bekannt, zusätzliche Führungselemente in die Metallplatte einzuarbeiten oder z.B. in Form von Winkel-Unterlegscheiben einzusetzen. Bei einer Schrägverschraubung sind die Schrauben - je nach Schrägstellung - im Wesentlichen auf Zug belastet und werden, wenn überhaupt, nur in geringem Ausmaß auf Scherung beansprucht, wodurch die Schrauben höhere Kräfte als bei Verschraubung im rechten Winkel aufnehmen können und eine stabile Verbindung der Werkstücke erzielt wird.

Allerdings ist das Setzen einer solchen Schrägverschraubung schwierig, da sich oft die Werkstücke beim Eindrehen der Schrauben unter Kraft gegeneinander verschieben. Ferner können beim Setzen solcher Schrägverschraubungen Lokalisierungsfehler und sogar Auslassungen einzelner Schrägverschraubungen auftreten, ohne dass dies an einem fertiggestellten Aufbau aus mehreren Werkstücken sofort erkennbar wäre. Dadurch wird die Belastbarkeit der Verbindung unvorhergesehen herabgesetzt. Überdies sind bei Arbeiten über Kopf Vorkehrungen zu treffen, um ein Herabfallen von zunächst losen Teilen zu verhindern.

Aus EP 2 799 636 A1 ist ein zylindrischer Verbinder für zwei Werkstücke bekannt, der in eine Vertiefung an einem der Werkstücke eingesetzt wird und durch Schrägverschraubung die Werkstücke verbindet, wobei Bohrungen für die Verschraubung den Verbinder an seinen Zylindermantelflächen durchsetzen.

EP2799636A1 offenbart alle die Merkmale des Oberbegriffes des Anspruchs 1.

Die Erfindung setzt sich zum Ziel, einen Verbinder zum Schrägverschrauben zweier Werkstücke zu schaffen, der einfach und sicher in der Anwendung ist.

Dieses Ziel wird erfindungsgemäß mit einem Verbinder erreicht, welcher
einen Grundkörper mit einer Grundfläche, einer dazu parallelen Deckfläche und einer diese verbindenden, allgemein-zylindrischen Mantelfläche zum formschlüssigen Einsetzen in ein allgemein-zylindrisches Sackloch zumindest eines der Werkstücke, und
eine Aussparung in der Deckfläche umfasst, von welcher zumindest zwei Bohrungen zur Aufnahme jeweils einer Schraube unter einem Winkel auseinanderlaufend ausgehen, wobei die Bohrungen die Grundfläche durchsetzen, und wobei die Mantelfläche des Verbinders von den Bohrungen nicht durchsetzt und dadurch an ihren Stirnseiten kantenfrei ist.

Ein solcher Verbinder, welcher formschlüssig in ein Sackloch eingesetzt wird, das in einem der Werkstücke oder werkstückübergreifend in beiden Werkstücken vorgesehen ist, nimmt mögliche Scherkräfte auf. Eine fehlerhafte Anordnung der Verbinder ist bei vorgefertigten Sacklöchern ausgeschlossen und ein planungswidriges Auslassen einzelner Verbinder fiele sofort ins Auge, da Sacklöcher unbesetzt blieben. Ist das Sackloch werkstückübergreifend angeordnet, so wirkt der Verbinder durch sein Einsetzen in das Sackloch wie eine Zapfenverbindung und verhindert bei der Montage ein Verschieben der Werkstücke gegeneinander. Die genannte Aussparung ermöglicht ferner ein bündiges Einsetzen des Verbinders in die zu verbindenden Werkstücke auch ohne ein Vorstehen der Schraubenköpfe. Der Verbinder kann zum Schrägverschrauben nicht bloß von Werkstücken aus Holz sondern auch von solchen aus anderen Materialien, z.B. Kunststoff, Verbundstoff oder sogar Metall, eingesetzt werden. Da ferner die Bohrungen die Grundfläche durchsetzen, ergibt sich eine besonders günstige Kräfteverteilung des Verbinders auf die Werkstücke. Dabei greift die Mantelfläche des Verbinders an ihren am stärksten belasteten Stirnseiten kantenfrei an der Wandung des Sacklochs an, wodurch die Gefahr eines Spaltens der Werkstücke reduziert wird.

Bevorzugt sind Grund- und Deckfläche des Verbinders im Wesentlichen oval. Ovale Sacklöcher sind einfach in Werkstücke einzubringen, z.B. nachträglich durch Fräsen. Ferner ist die Krafteinspeisung eines ovalen Verbinders in die Werkstücke günstig, da lokale Kraftspitzen, wie sie bei z.B. eckigen Verbindern aufträten, vermieden werden.

In einer vorteilhaften Variante des Verbinders ist der genannte Winkel zwischen 60 und 120 Grad, bevorzugt etwa 90 Grad. Ein solcher Winkel führt zu einer günstigen Kraftwirkung der Schrägverschraubung auf die Werkstücke. Ferner lassen sich die Bohrungen dadurch platzsparend anordnen, ohne dass eine der Schrauben nach ihrem Eindrehen in das eine Werkstück das Eindrehen der anderen Schraube in das andere Werkstück behindern würde. Ein Winkel von 90 Grad entspricht dabei dem größten Winkel, d.h. jenem mit der vorteilhaftesten Kraftwirkung, bei welchem die Bohrungen dennoch mit geringem gegenseitigen Abstand von der Aussparung ausgehen können.

Besonders günstig ist, wenn der Verbinder an seiner Mantelfläche zu Grund- und Deckfläche normal verlaufende Keilrippen hat, welche sich in Richtung zur Grundfläche hin verjüngen. Dadurch verkeilt der Verbinder beim Einsetzen in das Sackloch und fällt vor dem Eindrehen der Schrauben auch bei Arbeiten über Kopf nicht aus den Werkstücken. Durch die Verjüngung wird ein einfaches, selbst-zentrierendes Einsetzen ermöglicht.

Zum Zentrieren der Schrauben sind bevorzugt die Bohrungen zur Aufnahme der Schraubenköpfe angesenkt.

In einer besonders stabilen Ausführungsform ist der Verbinder aus Metall, bevorzugt aus Aluminium.

Die Erfindung wird nachfolgend anhand eines in den beigeschlossenen Zeichnungen dargestellten Ausführungsbeispiels näher erläutert. In den Zeichnungen zeigt:
Fig. 1 einen erfindungsgemäßen Verbinder zum Schrägverschrauben zweier Werkstücke in einer Perspektivansicht von schräg oben;
Fig. 2 den Verbinder von Fig. 1 in einer in ein Sackloch der beiden Werkstücke eingesetzten Stellung in einer Perspektivansicht von schräg oben; und
Fig. 3 den Verbinder und die Werkstücke von Fig. 2 in einem Längsschnitt.

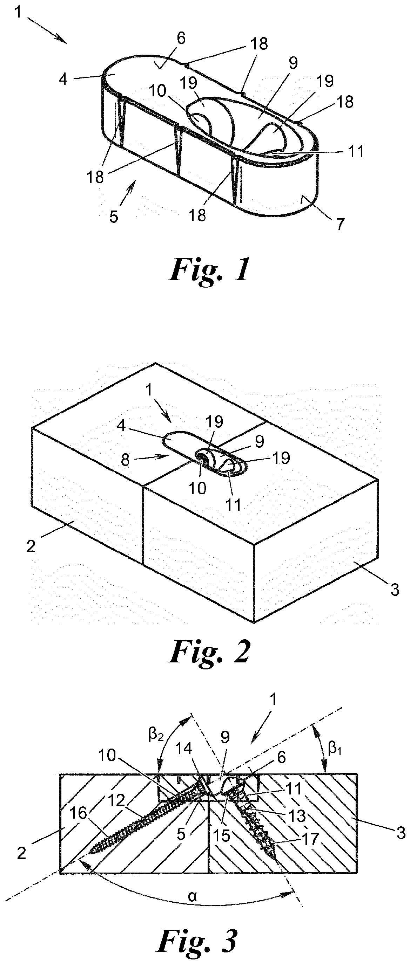

Die Fig. 1 bis 3 zeigen ein Beispiel eines Verbinders 1 zum Schrägverschrauben zweier Werkstücke 2, 3. Im dargestellten Beispiel sind die Werkstücke 2, 3 aus Holz, sie könnten alternativ aus Kunststoff, Verbundstoff oder, bei geeigneter Schrägverschraubung, sogar aus Metall und dabei optional aus unterschiedlichen Werkstoffen sein.

Der Verbinder 1 des in den Fig. 1 bis 3 dargestellten Beispiels ist aus Aluminium, könnte alternativ jedoch aus einem anderen Metall oder aus Kunststoff bzw. Verbundstoff gefertigt sein.

Der Verbinder 1 hat einen Grundkörper 4 mit einer Grundfläche 5 (Fig. 3), einer zur Grundfläche 5 parallelen Deckfläche 6 und einer die Grundfläche 5 und die Deckfläche 6 verbindenden, allgemein-zylindrischen Mantelfläche 7. Der Grundkörper 4 wird in ein allgemein-zylindrisches Sackloch 8 der Werkstücke 2, 3 formschlüssig eingesetzt (Fig. 2 und 3).

Der Grundkörper 4 hat ferner eine Aussparung 9 in seiner Deckfläche 6, im dargestellten Beispiel eine elliptische Aussparung 9. Von der Aussparung 9 gehen zwei Bohrungen 10, 11 unter einem gegenseitigen Winkel α auseinanderlaufend aus. In jeder der Bohrungen 10, 11 ist jeweils eine Schraube 12, 13 aufgenommen (Fig. 3). Der genannte Winkel α, unter welchem die beiden Bohrungen 10, 11 auseinanderlaufen, ist zwischen 60° und 120°, bevorzugt etwa 90°.

Optional kann der Grundkörper 4 mehr als eine Aussparung 9 in seiner Deckfläche 6 mit davon auseinanderlaufend ausgehenden Bohrungen 10, 11 haben und/oder es können von jeder Aussparung 9 mehr als zwei Bohrungen 10, 11 ausgehen, welche in zwei Gruppen gegliedert auseinanderlaufen.

Die Schrauben 12, 13 sitzen in ihrer eingesetzten und festgezogenen Stellung jeweils mit ihren Köpfen 14, 15 im Grundkörper 4 des Verbinders 1. Im Beispiel der Fig. 3 sind Aussparung 9 und Köpfe 14, 15 der Schrauben 12, 13 aufeinander angestimmt, sodass die Schraubenköpfe 14, 15 in der eingesetzten Stellung der Schrauben zur Gänze im Inneren der Aussparung 9 liegen. Ein zumindest teilweises Herausragen zumindest eines der Schraubenköpfe 14, 15 aus der Aussparung 9 wäre alternativ möglich.

Die linke Schraube 12 ist gemäß Fig. 3 mit ihrem Gewinde 16 unter einem spitzen Winkel β₁ gegenüber der Deckfläche 6 in das linke Werkstück 2 und die rechte Schraube 15 mit ihrem Gewinde 17 unter einem spitzen Winkel β₂ gegenüber der Deckfläche 6 in das rechte Werkstück 3 gedreht.

Im dargestellten Beispiel ist das Sackloch 8 werkstückübergreifend. Bei geeigneter Wahl der Länge der Schrauben 12, 13 und der Winkel α, β₁, β₂ könnte das Sackloch 8 alternativ zur Gänze in einem der beiden Werkstücke 2, 3 - beispielsweise dem rechten Werkstück 3 - vorgesehen sein und bloß die jeweilige Schraube 12, 13 - in dem Beispiel die linke Schraube 12 - in das andere Werkstück 2, 3 - in dem Beispiel das linke Werkstück 2 - ragen (nicht dargestellt).

Grund- und Deckfläche 5, 6 des Grundkörpers 4 sind in dem gezeigten Beispiel im Wesentlichen oval, d.h. nicht konkav, sondern beispielsweise elliptisch oder aus Kreisbögen und Geraden, z.B. aus zwei Halbkreisen und zwei diese verbindenden Geraden wie in den Fig. 1 bis 3 gezeigt, zusammengesetzt. Eine solche Form ist auch nachträglich einfach als Sackloch 8 in die Werkstücke 2, 3 einzufräsen. Es versteht sich, dass Grund- und Deckfläche 5, 6 und somit der Grundkörper 4, wenn gewünscht, eine andere Form haben, z.B. mehreckig sein, könnten. Auch muss das Sackloch 8 zum formschlüssigen Einsetzen des Verbinders 1 nicht notwendigerweise einen der Grund- und Deckfläche 5, 6 des Grundkörpers 4 konformen Querschnitt haben, sondern könnte beispielsweise bauchig, z.B. kreisrund, od.dgl. sein.

Im dargestellten Beispiel entsprechen einander die Tiefe des Sacklochs 8 und die Höhe der Mantelfläche 7 des Grundkörpers 4, sodass die Deckfläche 6 des Grundkörpers 4 nach dessen Einsetzen in das Sackloch 8 bündig mit beiden Werkstücken 2, 3 abschließt. Ein solches bündiges Abschließen ist jedoch nicht notwendig für die Funktion des Verbinders 1. Der Grundkörper 4 des Verbinders 1 könnte deshalb alternativ nach dem vollständigen Einsetzen in das Sackloch 8 daraus hervorragen, d.h. der Grundkörper 4 höher sein als das Sackloch 8 tief ist, oder darin versenkt sein, d.h. der Grundkörper 4 niedriger sein als das Sackloch 8 tief ist. Ferner ist der Verbinder 1 auch für Werkstücke 2, 3 verwendbar, die nicht zueinander bündig sind, sondern z.B. stufenförmig aneinander anschließen.

Gemäß dem Beispiel von Fig. 1 hat der Verbinder 1 an seiner Mantelfläche 7 zu Grund- und Deckfläche 5, 6 normal verlaufende, optionale Keilrippen 18, welche sich in Richtung zur Grundfläche 5 hin verjüngen. Die optionalen Keilrippen 18 sind dabei an der Mantelfläche 7 nach Bedarf verteilt, um den Verbinder 1 beim Einsetzen in das Sackloch 8 darin zu verkeilen.

Die Bohrungen 10, 11 sind zur Aufnahme der Schraubenköpfe 14, 15 optional angesenkt, d.h. sie haben jeweils eine Senkung 19 zur Aufnahme der Schraubenköpfe 14, 15.

Bei dem Verbinder 1 gemäß dem Beispiel von Fig. 3 durchsetzen die Bohrungen 10, 11 die Grundfläche 5 des Grundkörpers 4. Bei anderer Form des Grundkörpers 4, z.B. einer höheren Mantelfläche 7, und/oder einer anderen Wahl der Winkel α, β₁, β₂, würde zumindest eine der Bohrungen 10, 11 die Mantelfläche 7 zumindest teilweise durchsetzen.

Der Verbinder 1 kann nicht nur bei stumpfen Verbindungen zweier Werkstücke 2, 3, z.B. Verbindungen auf Stoß oder in Gehrung, sondern auch bei überlappenden Verbindungen, z.B. mit Nut und Spund, Schlitz und Zapfen, Zinkungen od.dgl., und sogar bei Verbindungen mit Hinterscheidungen, z.B. mit Schwalbenschwanz, Gratung od.dgl., eingesetzt werden.

Die Erfindung ist nicht auf die dargestellten Ausführungsformen beschränkt, sondern umfasst alle Varianten, Kombinationen und Modifikationen, die in den Rahmen der angeschlossenen Ansprüche fallen.

## Patentansprüche

1. Verbinder zum Schrägverschrauben zweier Werkstücke, umfassend einen Grundkörper (4) mit einer Grundfläche (5), einer dazu parallelen Deckfläche (6) und einer diese verbindenden, allgemein-zylindrischen Mantelfläche (7) zum formschlüssigen Einsetzen in ein allgemein-zylindrisches Sackloch (8) zumindest eines der Werkstücke (2, 3), und eine Aussparung (9) in der Deckfläche (6), von welcher zumindest zwei Bohrungen (10, 11) zur Aufnahme jeweils einer Schraube (12, 13) unter einem Winkel (α) auseinanderlaufend ausgehen, **dadurch gekennzeichnet, dass** die Bohrungen (10, 11) die Grundfläche (5) durchsetzen, wobei die Mantelfläche (7) des Verbinders (1) von den Bohrungen (10, 11) nicht durchsetzt und dadurch an ihren Stirnseiten kantenfrei ist.

2. Verbinder nach Anspruch 1, **dadurch gekennzeichnet, dass** Grund- und Deckfläche (5, 6) im Wesentlichen oval sind.

3. Verbinder nach Anspruch 1 oder 2, **dadurch gekennzeichnet, dass** der genannte Winkel (α) zwischen 60 und 120 Grad, bevorzugt etwa 90 Grad, ist.

4. Verbinder nach einem der Ansprüche 1 bis 3, **dadurch gekennzeichnet, dass** der Verbinder (1) an seiner Mantelfläche (7) zu Grund- und Deckfläche (5, 6) normal verlaufende Keilrippen (18) hat, welche sich in Richtung zur Grundfläche (5) hin verjüngen.

5. Verbinder nach einem der Ansprüche 1 bis 4, **dadurch gekennzeichnet, dass** die Bohrungen (10, 11) zur Aufnahme der Schraubenköpfe (14, 15) angesenkt sind.

6. Verbinder nach einem der Ansprüche 1 bis 5, **dadurch gekennzeichnet, dass** der Verbinder (1) aus Metall, bevorzugt aus Aluminium, ist.

## Claims

1. Connector for slanted screwing of two workpieces, comprising a base body (4) with a bottom surface (5), a top surface (6) parallel thereto and a generally cylindrical shell surface (7) connecting the bottom and top surfaces for positive insertion into a generally cylindrical blind hole (8) of at least one of the workpieces (2, 3), and a recess (9) in the top surface (6), from which recess at least two bores (10, 11) each for receiving a screw (12, 13) emanate divergently at an angle (α), **characterized in that** the bores (10, 11) penetrate the bottom surface (5), wherein the shell surface (7) of the connector (1) is not penetrated by the bores (10, 11) and thus free from edges at its end faces.

2. Connector according to claim 1, **characterized in that** the bottom and top surfaces (5, 6) are substantially oval.

3. Connector according to claim 1 or 2, **characterized in that** said angle (α) is between 60 and 120 degrees, preferably about 90 degrees.

4. Connector according to any one of claims 1 to 3, **characterized in that** the connector (1) has, on its shell surface (7), wedge ribs (18) extending perpendicularly to the bottom and top surfaces (5, 6) and tapering towards the bottom surface (5).

5. Connector according to any one of claims 1 to 4, **characterized in that** the bores (10, 11) are countersunk for receiving the screw heads (14, 15).

6. Connector according to any one of claims 1 to 5, **characterized in that** the connector (1) is made of metal, preferably of aluminium.

## Revendications

1. Connecteur permettant le vissage en biais de deux pièces, comprenant un corps de base (4) pourvu d'une surface de base (5), d'une surface de couverture (6) parallèle à celle-ci, et d'une surface d'enveloppe (7) généralement cylindrique reliant celles-ci et permettant une insertion par complémentarité des formes dans un trou borgne (8) généralement cylindrique d'au moins une des pièces (2, 3), et un évidement (9) dans la surface de couverture (6), à partir duquel au moins deux alésages (10, 11), permettant respectivement la réception d'une vis (12, 13), partent en s'éloignant l'un de l'autre sous un angle (α), **caractérisé en ce que** les alésages (10, 11) traversent la surface de base (5), où la surface d'enveloppe (7) du connecteur (1) n'est pas traversée par les alésages (10, 11) et se trouve ainsi exempte de rebords sur ses faces frontales.

2. Connecteur selon la revendication 1, **caractérisé en ce que** la surface de base et la surface de couverture (5, 6) sont essentiellement ovales.

3. Connecteur selon la revendication 1 ou 2, **caractérisé en ce que** ledit angle (α) est entre 60 et 120 degrés, de préférence d'environ 90 degrés.

4. Connecteur selon l'une des revendications 1 à 3, **caractérisé en ce que** le connecteur (1) possède au niveau de sa surface d'enveloppe (7) des nervures en coin (18) s'étendant normalement par rapport à la surface de base et à la surface de couverture (5, 6) et s'amenuisant en direction vers la surface de base (5).

5. Connecteur selon l'une des revendications 1 à 4, **caractérisé en ce que** les alésages (10, 11) sont chanfreinés pour la réception des têtes de vis (14, 15).

6. Connecteur selon l'une des revendications 1 à 5, **caractérisé en ce que** le connecteur (1) est en métal, de préférence en aluminium.
